# EUROPÄISCHE PATENTSCHRIFT

(11) **EP 1 280 724 B1**
(45) Veröffentlichungstag und Bekanntmachung des Hinweises auf die Patenterteilung: **15.09.2004**
(21) Anmeldenummer: 01923459.0
(22) Anmeldetag: 30.04.2001
(51) Int. Cl.: B65H 5/12, H04N 1/06, B41F 33/00

(54) **EINRICHTUNG ZUM TRANSPORT VON BOGENFÖRMIGEN MATERIAL**
DEVICE FOR CONVEYING SHEET-LIKE MATERIAL
DISPOSITIF POUR TRANSPORTER DES MATERIAUX CINTRES

(30) Priorität: 08.05.2000 CH 907002000
(43) Veröffentlichungstag der Anmeldung: 05.02.2003
(73) Patentinhaber: KBA-GIORI S.A., 1003 Lausanne (CH)
(72) Erfinder: SCHAEDE, Johannes, Georg, 97074 Würzburg (DE); REINHARD, Gerald, Josef, 97320 Sulzfeld (DE); BROWN, Steve, CH-1163 Etoy (CH)
(74) Vertreter: Meylan, Robert Maurice
(86) Internationale Anmeldenummer: PCT/CH2001/000270
(87) Internationale Veröffentlichungsnummer: WO 2001/085586

(56) Entgegenhaltungen:
- EP-A- 0 773 661
- EP-A- 0 818 307
- WO-A-00/21277
- DE-A- 19 624 196
- GB-A- 2 073 986
- US-A- 4 918 466
- US-A- 5 255 907

## Beschreibung

Die Erfindung betrifft die Ermöglichung der Inspektion, Markierung oder sonstigen Bearbeitung oder Beobachtung eines mittels einer starren, rotierenden Bogentransporteinrichtung auf einer radialen Bahn registerhaltig transportierten Druckbogens von der Innenseite, d. h. konkaven Seite der Bewegungsbahn her.

Das Dokument EP 0 818 307 offenbart eine Einrichtung zum Transport von bogenförmigen Material mit eine feststehende Drehachse bewegten Systems erzeugten Transportbahn und einer Vorrichtung zur Beaufschlagung des bogenförmigen Materials.

Herkömmlicherweise erfolgt der Bogentransport in Bogendruckmaschinen (z.B. bei Wertpapier-Bogenmaschinen) sowohl im Bereich der Anlage und der Bogenauslage durch nicht registerhaltige Saug-, Band- und Kettentransportsysteme als auch im Bereich des Druckwerkes durch registerhaltige Zwangsführung in Greifersystemen auf Übergabe- bzw. Druckzylindern.

Für alle für den Druckprozeß relevanten Vorgänge, wie den Druckvorgang selbst sowie Markierungs-, Bearbeitungs-, Lese- oder Beobachtungsvorgänge ist der einzelne Druckbogen daher nur auf einer konvexen Zylinderoberfläche aufliegend partiell zugänglich (Linienberührung beim Druckvorgang, Linienbeobachtung mit einer Zeilenkamera).

Soll dagegen die Gesamtoberfläche z.B. für eine Bogeninspektion mit einer Flächenkamera gleichzeitig ohne unzulässigen Krümmungseinfluß einer Zylinderoberfläche zugänglich sein, so kann dies in bekannter Weise nur in einer Bogenführung durch ein Ketten- oder anderweitiges lineares Bogentransportsystem über eine Führungseinrichtung wie z.B. eine Saugplatte erfolgen.

Nachteilig wirkt sich hierbei die mechanische Toleranz des vorhandenen Transportsystems (z.B. Transportkette) selbst als auch der zur Behebung der Registerungenauigkeit erforderliche Aufwand (z.B. mechanisches oder elektronisches Registersystem) aus.

Neben den Bauteilen für das Transportsystem selbst (Kette, Kettenschienen, Kettenradwellen) sind insbesondere dann zusätzliche Vorrichtungen zur Ausrichtung des Druckbogens bzw. des Greifersystems erforderlich wenn der Druckbogen nach dem erfolgten Transport- oder Inspektionsvorgang einem anschließenden Druckprozeß in einer Druckeinheit unmittelbar registerhaltig zugeführt werden soll.

Aufgabe der vorliegenden Erfindung ist es daher die Registerhaltigkeit eines Zylindertransportes eines Druckbogens gleichzeitig mit der Zugänglichkeit der Gesamtoberfläche eines Flachtransportes eines Druckbogens zur ermöglichen.

Der Bau- bzw. Kostenaufwand für die nachträgliche Ausrichtung eines nicht registerhaltigen Transportsystemes soll vermieden werden. Der Bogen soll ohne den störenden Krümmungseinfluß einer konvexen Zylinderaußenfläche gleichzeitig ganzflächig zugänglich, z.B. beobachtbar oder bearbeitbar sein.

Die Bogentransporteinrichtung soll eine kompakte, kostengünstige und flexible Integration in bestehende Druckmaschinen zulassen.

Erfindungsgemäß wird diese Aufgabe durch eine rotierende, mit mehreren Bogengreifersystemen ausgestattete und eine kreisförmigen Bogentransportbahn beschreibende Bogentransporteinrichtung mit starrer registerhaltiger Lagerung gelöst. Die Bogenführung erfolgt dabei von der Außenseite der beschriebenen Kreisbahn her, so dass der transportierte Bogen von der konkaven Innenseite der Transportbahn frei zugänglich ist.

Eine erste vorteilhafte Eigenschaft der Erfindung besteht darin, dass die außenliegende Bogentransport- und Führungsbahn die innenliegenden Inspektions-, Markierungs-, Lese- oder Bearbeitungseinrichtungen umschließt.

Dies ermöglicht sowohl eine raumsparende Bauweise als auch die Zugänglichkeit der für Inspektions- bzw. Bilderfassungsvorgänge im Vergleich zu einer Zylinderaußenfläche optisch wesentlichen günstigeren konkaven Kreisbahninnenfläche mit einem im Bezug zum Bogenformat großen Krümmungsradius (R > Bogenlänge).

Ein zweiter Vorteil des Transportsystems ist die Bauweise als starr gelagerte, d.h. um eine feststehende Achse rotierende mit Bogengreifersystemen, z.B. an radialen Greiferarmen, versehene Einheit mit der daraus resultierenden Registerhaltigkeit eines Zylindertransports, ohne dass hierfür ein gegenüber einem herkömmlichen Zylinder zusätzlicher mechanischer Registeraufwand erforderlich ist.

Eine weitere vorteilhafte Ausgestaltung zeichnet sich dadurch aus, dass die Bogentransporteinrichtung in kostengünstiger Weise auch durch einen Antrieb mit geringer Drehsteifigkeit wie z.B. einen Zahnriementrieb dann angetrieben werden kann, wenn nicht während des gesamten Transportweges ein registerhaltiger Gleichlauf in Umfangsrichtung, sondern lediglich die registerhaltige Übergabe der Druckbogen von einer Transporteinrichtung zu einer zweiten bzw. einer Übergabetrommel gefördert ist.

In dieser Ausführung greift ein am Greifersystem des übergebenden Transportsystems angebrachtes Zahnradsegment in eine am Greifersystem des übernehmenden Transportsystems angebrachtes Gegenradsegment so ein, dass im Übergabepunkt des Druckbogens die beiden Transportsysteme radial gegeneinander exakt ausgerichtet werden und somit eine registerhaltige Bogenübergabe erfolgt.

Die Zahnradsegmente sind hierbei so gefertigt, dass der Teilkreisdurchmesser der gewählten Verzahnung kleiner als der Nenndurchmesser der Bogentransportbahn der Einrichtung ist.

Dadurch wird gewährleistet, dass bei Annäherung des Bogengreifersystems an den Übergabepunkt zunächst ein Grobeingriff der beiden gegenseitigen zugehörigen Zahnradsegmente bei relativ großen Zahnspiel erfolgt.

Da der Berührungspunkt des Teilkreisdurchmessers des Zahnsegments mit dem Nenndurchmesser der Bogentransportbahn deckungsgleich ist mit dem Übergabepunkt des Druckbogens, verringert sich das Zahnspiel bei fortschreitender Annäherung an den Übergabepunkt bis auf ein Nullspiel bzw. einen Minimalwert und gestattet so die exakte registerhaltige Ausrichtung der Transporteinrichtung während der Bogenübergabe.

Nach der Bogenübergabe läuft der beschriebene Verzahnungseingriff in umgekehrter Richtung ab, so dass außerhalb der Bogenübergabe die Transporteinrichtungen zueinander sowie zu anschließenden Übergabetrommeln ausschließlich über den Zahnriementrieb gekoppelt sind.

Ein fertigungstechnischer Vorteil der verwendeten Zahnsegmente besteht in der Ermöglichung des erforderlichen variablen Zahnspiels im Betrieb bei gleichzeitiger kostengünstiger Verwendung einer herkömmlichen Verzahnung mit konstanten Maßen.

Eine besonders montage- und wartungsgünstige Bauweise des Zahnriemenantriebs besteht darin, den Teil des seitlichen Maschinengestells, welcher zur Aufnahme der feststehenden Achse der Transporteinrichtung dient, so durch den Bereich zwischen Zahnriemenrädern und Zahnriemen nach außen zu führen, dass im betriebsfertigen Zustand der Einrichtung ein Auswechseln bzw. Montieren des Zahnriemens jederzeit von außen ohne die Demontage von Gestellbauteilen möglich ist.

In einer vorteilhaften Erweiterung des Funktionsprinzips werden zwei Bogentransporteinrichtungen gegenläufig gekoppelt, so dass der zu bearbeitende, markierende, beobachtende oder zu inspizierende Druckbogen zur Ausführung dieser Vorgänge sowohl in der ersten Transporteinrichtung von der Vorderseite als auch unmittelbar anschließend in der zweiten Einrichtung von der Rückseite zugänglich ist. Außerdem kann durch eine vertikale Anordnung der zweiten Transporteinrichtung über der ersten Transporteinrichtung die erforderliche Baulänge der Druckmaschine oder des Aggregates, in der die beschriebene Transporteinrichtung eingebaut ist, gegenüber herkömmlichen Bogentransportsystemen wesentlich verkürzt werden.

Eine fertigungs- bzw. kostengünstige Bauweise der Transporteinrichtung ergibt sich daraus, das Maschinengestell zur Aufnahme der Einrichtung nur im Bereich der Drehachse und Lagerung als tragendes Bauteil zu gestalten, während im Bereich der außenliegenden kreisförmigen Bogenbewegungsbahn lediglich kostengünstig zu fertigende Bogenführungselemente und Gehäusebauteile entsprechend dem gegebenen Einsatzzweck erforderlich sind.

Die vorgenannten Bogenführungselemente können neben den geläufigen Bogenführungsstäben oder Bogenleitblechen vorzugsweise als Saugelemente wie z.B. Saugkästen mit gelochten Saugplatten ausgebildet sein, um einerseits im oberen Teil der Einrichtung den Druckbogen entgegen der Schwerkraft auf der kreisförmigen Bewegungsbahn zu führen, andererseits beim Durchlaufen des Bearbeitungs-Markierungs-, Beobachtungs- oder Inspektionsvorganges die Bogenoberfläche exakt glatt aufliegend auf der Führungsfläche zu halten.

Weiterhin können die Saugelemente zur Realisierung einer Durchlichtinspektion, d.h. zur Durchleuchtung des Druckbogens senkrecht zur Transportrichtung so unterbrochen werden, dass sich ein Lichtdurchtrittsspalt für eine außerhalb der Bogenbahn angeordneten Lichtquelle ergibt.

Eine vorteilhafte Gestaltung der Saugelemente besteht darin, einzelne Sektionen der Bogenführung aufklappbar oder leicht abnehmbar auszuführen, um freien Zugang von außen zu Montage-, Wartungs- und Einstellzwecken zu den im Innenbereich der Bogentransporteinrichtung installierten Systemen zu ermöglichen.

Eine alternative Gestaltungsvariante ergibt sich daraus, die Transporteinrichtung, falls dies zu bestimmten Einsatzzwecken erforderlich ist, von einer sog. Bedienseite her frei zugänglich auszubilden.

Hierbei befinden sich alle Antriebs-, Lager- und Steuerelemente auf einer bauartgemäß geschlossenen Antriebsseite der Transporteinrichtung während auf einer bauartgemäß offenen Bedienseite eine Stützlagerung mittels eines annähernd auf Nenndurchmesser der Transportbahn angeordneten und durch im Seitengestell angebrachte Kurvenrollen geführten Laufringes erfolgt.

In vorteilhafter Weise können somit alle in der Transporteinrichtung zu installierenden und zu betreibenden Systeme sowohl in Betriebsposition innerhalb der Transporteinrichtung frei zugänglich bedient, versorgt oder gelagert werden als auch zu Wartungs-, Montage- oder Einstellzwecken in einfacher Weise seitlich entnommen oder mittels einer geeigneten Vorrichtung seitlich aus Transporteinrichtung herausbewegt werden.

Die vorliegende Erfindung ist sowohl als selbständig zu betreibende Bogentransportmaschine zu Bearbeitungs-, Beobachtungs-, Sortier- oder Inspektionszwecken in Verbindung mit einem Bogenanleger, einer Bogenauslage und selbständigem Antrieb einzusetzen als auch vorteilhaft in bereits bestehende Bogendruck- oder Numeriermaschinen zu integrieren.

Eine besonders vorteilhafte Anordnung ergibt sich dadurch, die Bogentransporteinrichtung dem eigentlichen Druck- oder Numerieraggregat einer Druckmaschine konstruktiv so vorzuschalten, dass aufgrund einer beim Durchlaufen der Transporteinrichtung stattfindenden Klassifikation des Druckbogens, z.B. durch einen Inspektions- oder Lesevorgang, der Ablauf des anschließenden Druckprozesses dahingehend gesteuert werden kann, ob dieser Druckvorgang für einen betreffenden Bogen oder Nutzen stattfinden, nicht stattfinden oder verändert werden soll.

Beispielsweise kann das weitere Bedrucken oder Numerieren eines Druckbogens unterbrochen werden, wenn aufgrund eines Inspektionsvorganges innerhalb der vorgeschalteten Transporteinrichtung der Bogen als Ausschußbogen bewertet wurde.

Weitere Einzelheiten und Vorteile der vorliegenden Erfindung ergeben sich anhand der folgenden Beschreibungen im Zusammenhang mit den Figuren. Es zeigen :
- Fig. 1: Schema einer Transporteinrichtung mit vier Bogengreifersystemen, innerhalb angeordneten Bearbeitungs- oder Beobachtungssystemen und außerhalb angeordneten Saug- oder Bogenführungselementen.
- Fig. 2: Beispielhafter Querschnitt für die Transporteinrichtung aus Fig. 1 mit schematischer Darstellung der feststehenden Mittelachse zur Aufnahme der installierten Systeme in der Einrichtung sowie außerhalb des Gestells befindlichen Antriebsrad.
- Fig. 3: Schema einer doppelt ausgeführten Transporteinrichtung zur Beaufschlagung sowohl der Druckbogenvorderseite als auch der -rückseite mit beispielhaft angeordnetem Bearbeitungs- und Beobachtungssystem sowie Übergabetrommel zum Bogentransport.
- Fig. 4: Schema einer doppelt ausgeführten Transporteinrichtung mit Zahnriemenantrieb und zentral angeordneten Lagergestellen zur freien Montage und Demontage der Antriebsriemen.
- Fig. 5: Beispielhafter Querschnitt für die Antriebsvariante mit Zahnriementrieb aus Fig. 4 mit schematischer Darstellung der seitlich durch die Antriebsebene nach außen geführten Lagergestelle.
- Fig. 6: Schema einer doppelt ausgeführten Transporteinrichtung mit radial in den Bogenübergabepunkten angeordneten Zahnsegmente mit d_{0 Zahnsegment} < d_{0 Bogenbahn} zur registergenauen Übergabe des transportierten Bogens von einer Einrichtung zur nachfolgenden oder zu einer Übergabetrommel.
- Fig. 7: Schema der Bauweise als geschlossener Hohlzylinder ohne separate Greiferarme, jedoch mit radialen Aussparungen der Zylindermantelfläche zur freien Zugänglichkeit der zu bearbeitenden oder zu beobachtenden Bogengesamtfläche.
- Fig. 8: Schema der Bauweise als antriebsseitig geschlossene und bedienseitig offene Transporteinrichtung zur freien seitlichen Zugänglichkeit der im Inneren der Einrichtung installierten Systeme.
- Fig. 9: Beispielhafter Querschnitt für die Bauweise als antriebsseitig geschlossene und bedienseitig offene Bogentransporteinrichtung gemäß Fig. 8.
- Fig. 10: Beispielhafte Anordnung der Bogentransporteinrichtung in Doppelausführung zur Bearbeitung oder Inspektion der Bogenvorderseite und Rückseite innerhalb einer Bogendruckmaschine.
- Fig. 11: Beispielhafte Anordnung der Bogentransporteinrichtung in Doppelausführung zur Bearbeitung oder Inspektion der Bogenvorderseite und - rückseite als eigenständig zu betreibende Bogentransportmaschine ohne Integration in eine Druckmaschine.

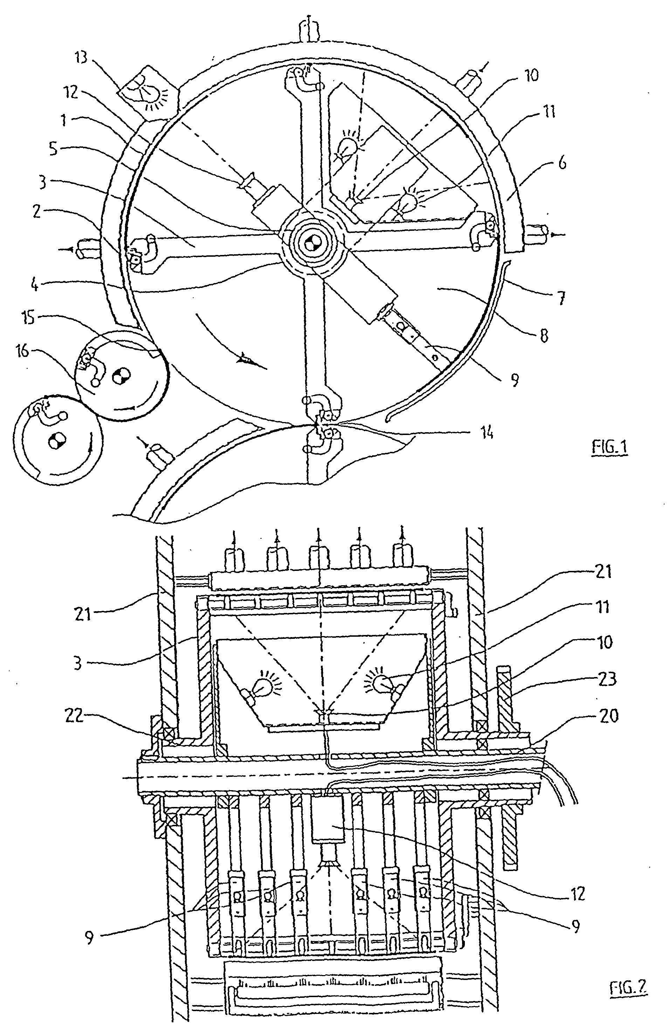

In der Darstellung gemäß Fig. 1 wird der zu transportierende Bogen 1 durch Greifersysteme 2 auf einer kreisförmigen Bahn bewegt. Die Greifersysteme sind durch starre Greiferarme 3 mit der Hohlwelle 4 der zentralen Lagerung 5 verbunden.
Die eigentliche Führung des Bogens erfolgt durch außenliegende Saugelemente 6 oder Bogenleitstäbe 7. Wie beschrieben, ist der Druckbogen somit während des gesamten Transportweges vom Innenraum 8 der Einrichtung frei zugänglich.
Im Innenraum sind beispielhaft dargestellt ein Bogenmarkiersystem 9, ein Bogeninspektions- oder Beobachtungssystem 10 mit innenliegender Beleuchtung 11, sowie ein Bogendurchleuchtungs- oder Transparentinspektionssystem 12 mit außerliegender Lichtquelle 13.

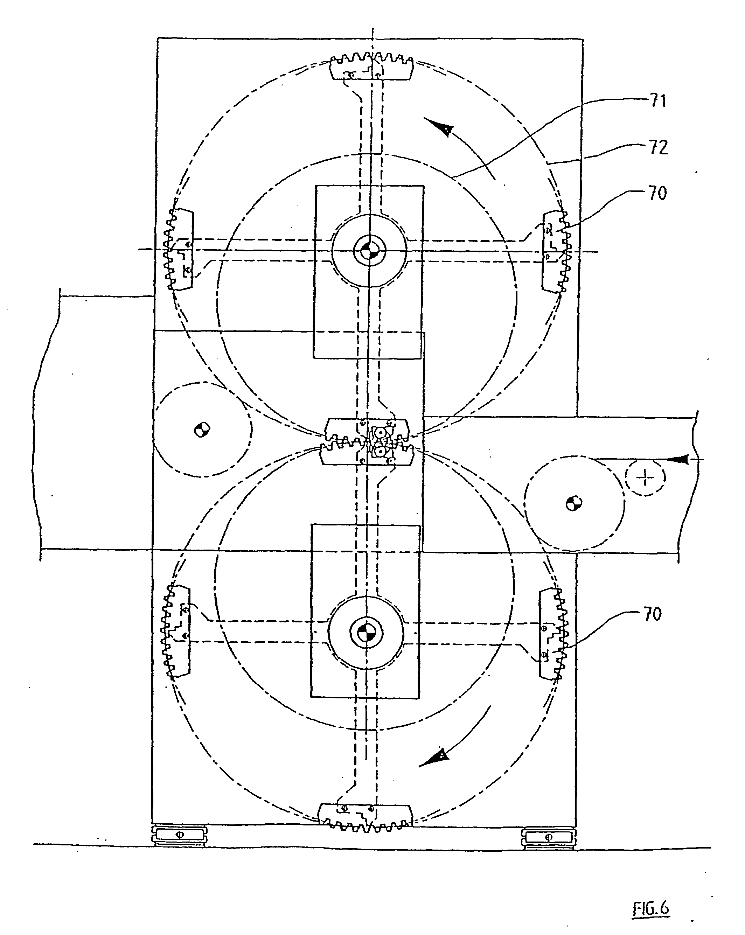

Durch die starre Ausführung und spielfreie Lagerung der rotierenden Transporteinrichtung sowie das in Fig. 6 gezeigte Registersystem wird der transportierende Bogen im Übergabepunkt 14 zwischen den Einrichtungen sowie im Übergabepunkt 15 zur Übergabetrommel 16 registerhaltig von einem Greifersystem auf das andere Greifersystem übergeben, ohne dass hierfür zusätzliche mechanische Führungs- oder Arretierelemente erforderlich sind.

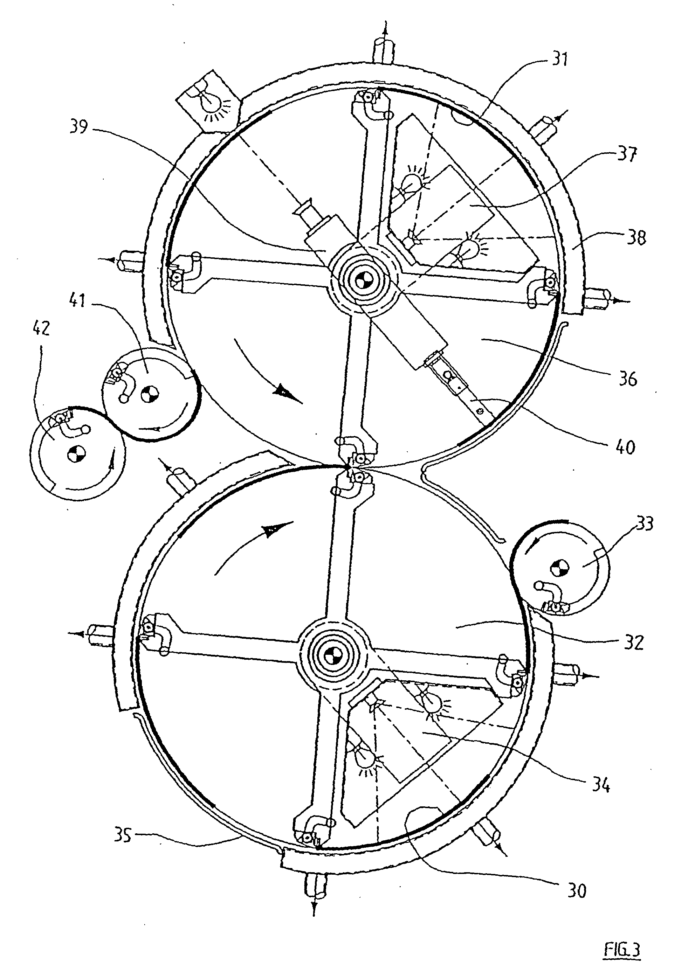

In der Darstellung gemäß Fig. 2 ist im Querschnitt durch die Transporteinrichtung nach Fig. 1 die feststehende Mittelachse 20 gezeigt, welche zur Installation der in Fig. 1 bezeichneten Systeme 9, 10, 11 und 12 dient.

Eine Sonderausführung des Markiersystems 9 dient, wie hier dargestellt, mit mehreren Markierstationen der separaten Markierung von Einzelnutzen auf dem Druckbogen.

Die Greiferarme oder Seitenflansche 3 der Einrichtung umschließen, wie dargestellt, die innenliegenden Systeme und sind in der in den Seitengestellen 21 gelagerten, hohlen Antriebswelle 22 zusammengeführt.

Der Antrieb der Transporteinrichtung erfolgt über die Antriebswelle 22 innerhalb oder außerhalb des Seitengestells mittels Zahnrädern 23, Zahnriemen, Kettenrädern oder anderen Antriebsmitteln und kann alternativ auch als elektronisch gesteuerter Direktantrieb (hier nicht dargestellt) ausgeführt sein.

Die hohle Mittelachse 20 dient zugleich auch der Kabelführung von Steuerungs- und Versorgungsleitungen zu den installierten Systemen.

In der Darstellung gemäß Fig. 3 ist die Doppelanordnung zweier Tansporteinrichtungen zur aufeinanderfolgenden Bearbeitung, Beobachtung, Markierung oder Inspektion sowohl der Bogenvorderseite 30 als auch der Bogenrückseite 31 gezeigt.

Hierbei wird der Druckbogen von der ersten Transporteinrichtung 32 zunächst von einer Übergabetrommel 33 übernommen und einem System, hier beispielhaft als Kamera/Beleuchtungssystem 34 dargestellt, zur Beaufschlagung der Bogenvorderseite zugeführt.

Die Bogenführung kann, wie gezeichnet, durch Leitbleche 35 oder Leitstäbe dann erfolgen, wenn durch Schwerkraft- und Fliehkrafteinfluß eine hinreichende Planlage des Druckbogens an die Führungselemente sichergestellt ist.

In der zweiten Transporteinrichtung 36 wird der Bogen anschließend einem zweiten System, hier ebenfalls als Kamera-/Beleuchtungssystem 37 dargestellt, zur Beaufschlagung der Bogenrückseite zugeführt.

Die Bogenführung erfolgt wie gezeichnet, durch Saugbleche oder Saugkästen 38 in dem Bereich der Bogenbahn, in welchem der Bogen entgegen der Schwerkraftwirkung auf der Führungsebene zusätzlich gehalten werden muss. Zusätzlich können, wie hier im zweiten Transportsystem beispielhaft dargestellt, weitere Beobachtungs- oder Inspektionssysteme 39 z.B. zur Durchleuchtung des Bogens eingebaut werden, oder Markiersysteme 40 zur Markierung der z. B. in den installierten Inspektionssystemen ermittelten Bogenklassifizierungen angeordnet sein.

Nach Durchlaufen der zweiten Transporteinrichtung 36 wird der Druckbogen an weitere Übergabetrommeln 41, 42 z. B. zum Weitertransport innerhalb einer Druckmaschine oder an eine Bogenablage übergeben.

Alle Bogenübergaben von Übergabetrommeln an die Transporteinrichtung sowie von der ersten zur zweiten Transporteinrichtung werden, soweit kein Zahnradantrieb der Transporteinrichtung erfolgt, zusätzlich durch die in Fig. 6 beschriebenen Zahnradsegmente im Übergabepunkt registerhaltig synchronisiert.

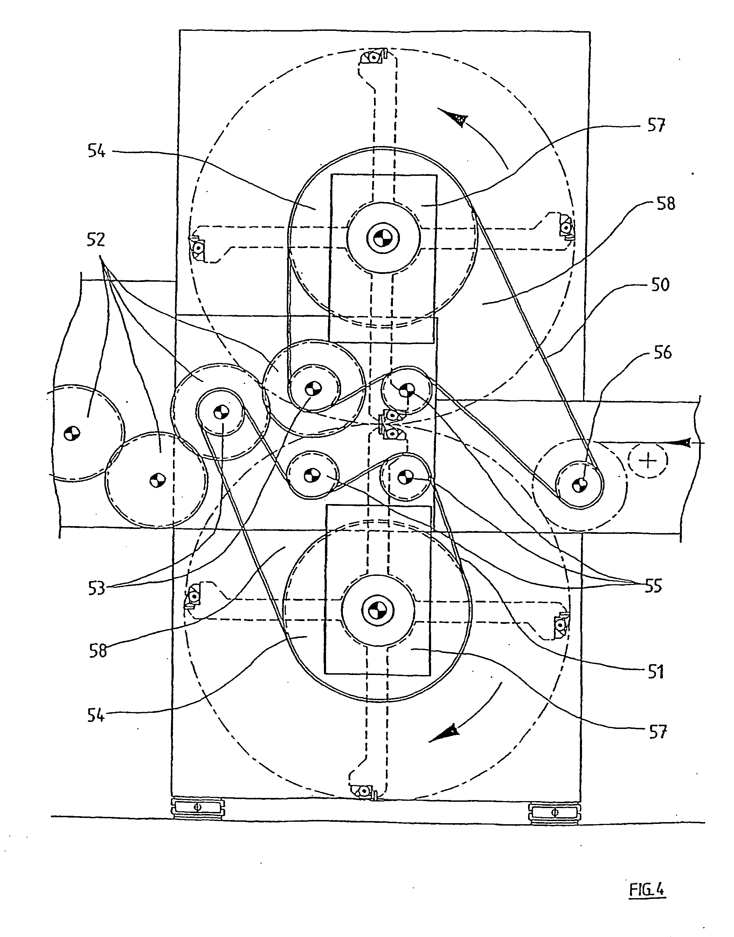

In der Darstellung gemäß Fig. 4 erfolgt der Antrieb der Bogentransporteinrichtung in vorteilhafter Weise durch Zahnriemen 50, 51 von der Antriebsseite der Maschine bzw. vom Antriebsmotor her.
Dies ermöglicht sowohl die Einsparung von Material und Herstellungsaufwand durch Wegfall von Antriebszahnrädern als auch die leichte Anpassbarkeit des Antriebsmediums an die Einbauposition der Transporteinrichtungen und Übergabetrommeln in der Maschine.

Die Zahnräder 52 stellen den herkömmlichen Räderzug des Maschinenantriebs dar.
Mit den beiden letzten gegenläufigen Zahnrädern sind die Antriebsriemenscheiben 53 des Zahnriementriebes gekoppelt.

Die Antriebsriemenscheiben 54 der eigentlichen Transporteinrichtungen können aus Raumeinsparungsgründen unter Beachtung des Übersetzungsverhältnisses auch, wie dargestellt, kleiner als der Nenndurchmesser der Transporteinrichtung ausgebildet sein.

Über Spannrollen 55 können die Zahnriemen 50, 51 so geführt werden, dass mehrere Achsen mit identischem Drehsinn wie z. B. hier gezeigt, der Antrieb der zweiten Transporteinrichtung sowie des Übergabeantriebs 56 zur ersten Transporteinrichtung mit nur einem Riemenzug verbunden werden.

In einer besonders vorteilhaften Bauweise werden die seitlichen Gestellteile 57, die der Aufnahme der feststehenden Mittelachsen der Transporteinrichtungen dienen, so in dem vom jeweiligen Zahnriemenantrieb umschlossenen Bereich 58 innerhalb des Zahnriemenzuges durch die Antriebsebene hindurchgeführt, dass eine Montage bzw. Demontage des Zahnriemens ohne Demontage von Gestellteilen oder Lösen der ggf. aufgrund der montierten Systeme fest einjustierten Mittelachse der Transportsysteme ermöglicht wird.

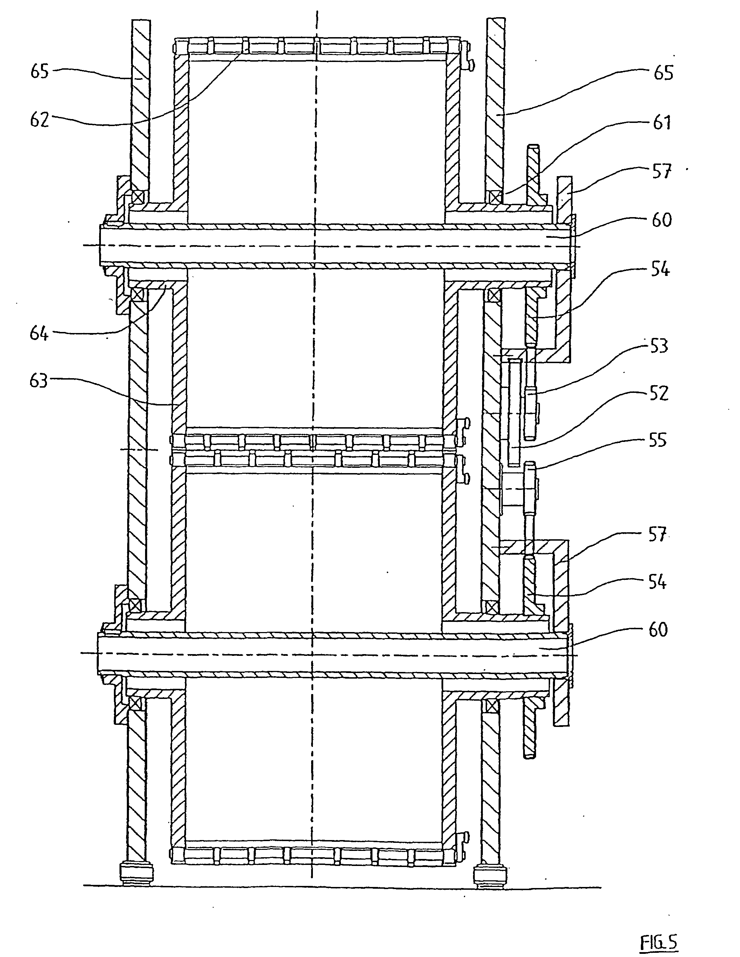

In der Darstellung gemäß Fig. 5 ist ein Querschnitt durch die mit Zahnriemen angetriebene Doppelanordnung der Transporteinrichtung nach Fig. 4 gezeigt.

Die Anbringung der im Inneren der Einrichtung installierten, hier nicht dargestellten, Systeme erfolgt wie beschrieben auf der starren Mittelachse 60, die zugleich der Kabelführung der Systeme dient und antriebsseitig in den gemäß Beschreibung Fig. 4 durch die Zahnriemen-Antriebsebene hindurch geführten Gestellteilen 57 gelagert ist.

Die Zahnriemen-Antriebsebene wird gebildet durch die schon beschriebenen, hier im Schnitt dargestellten Zahnriemenscheiben und Spannrollen 53, 54 und 55.

Das Abtriebsrad des Zahnradzuges 52 ist zugleich mit dem Antriebsrad 53 des Riemenzuges gekoppelt.

Die Greifersysteme 62 bilden zusammen mit den Greiferarmen oder Seitenflanschen 63 und der inneren Hohlwellen 64 die eigentliche starr verbundene, rotierende Bogentransporteinrichtung.

Die Lagerung erfolgt in Wälzlagern 61 in den seitlichen Maschinengestellen 65.

In der Darstellung gemäß Fig. 6 erfolgt, wie schon beschrieben, die registergenaue Synchronisation der Greifersysteme der Transporteinrichtung zueinander, sowie zu den Übergabetrommeln durch Zahnradsegmente 70.

Diese sind seitlich am Umfang der Transporteinrichtung so angeordnet, dass jedem Bogengreifersystem ein zugehöriges Zahnsegment, ausgerichtet auf die Mittelachse (Zentrale) der Bogenübergabe, zugeordnet ist.

Der Teilkreisdurchmesser 71 der Zahnsegmente 70 ist um einen gewissen Betrag kleiner als der Nenndurchmesser 72 der Transporteinrichtung, so daß bei Annäherung zweier Zahnsegmente zueinander zunächst ein Zahneingriff mit relativ großem Zahnspiel erfolgt.
Bei Weiterbewegung zum Bogenübergabepunkt hin vermindert sich das Zahnspiel entsprechend der Annäherung der beiden Durchmesser 71 und 72 bis auf das einjustierte Minimalspiel im Bogenübergabepunkt, der zugleich den tangentialen Berührungspunkt der Durchmesser 71 und 72 darstellt.

Für jede Bogenübergabe findet auf diese Weise ein kompletter Ausrichtungs- bzw. Registerzyklus statt, der gewährleistet, dass auch bei ggf. antriebsseitigen Schwankungen des Umfangregisters z.B. durch die Elastizität des verwendeten Antriebs, eine registergenaue Bogenübergabe erfolgt.

Ein besonderer fertigungstechnischer Vorteil der verwendeten Zahnradsegment 70 liegt darin, dass diese Segmente lediglich Ausschnitte aus einer konventionell und kostengünstig herzustellenden Verzahnungsgeometrie darstellen und dennoch ein kontinuierlich sich verengendes und wieder erweiterndes Zahnspiel zum Ablauf des Registervorganges ermöglicht wird, ohne dass diese Zahnspieldifferenzen z.B. während der Verzahnungsfertigung berücksichtigen werden müßten.

Weiterhin sind die Zahnsegmente auf der Transporteinrichtung radial verschiebbar umgeordnet, so dass auf einfache Weise eine bestmögliche Registerhaltigkeit der Bogenübergabe durch Einjustieren gegenseitig kämmender Zahnsegment auf ein minimales Zahnspiel im Übergabepunkt erzeugt werden kann.

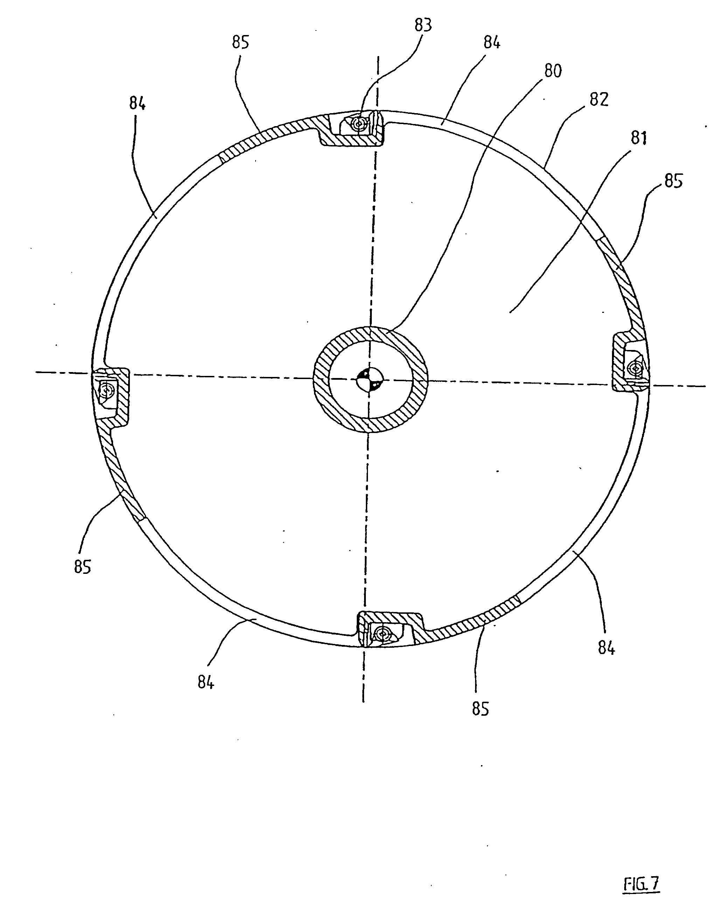

In der Darstellung gemäß Fig. 7 ist eine alternative Bauweise der Bogentransporteinrichtung als Zylinderkörper gezeigt.

Der Bogentransportzylinder besteht hierbei aus einer Hohlwelle oder Flansch 80 zur Aufnahme der Lagerung, einer oder zwei Seitenwänden 81 anstelle von separaten Greiferarmen sowie dem zylindrischen Mantelkörper 82 anstelle separater Greifertraversen.

Entsprechend einem herkömmlichen Druck- oder Transportzylinder sind im Zylindermantel die Bogengreifersysteme 83 eingebaut.

Jedoch weist die Zylindermantelfläche pro transportiertem Bogen je einen Ausschnitt 84 auf, der die Zugänglichkeit der Bogenoberfläche von der Innenseite der Transporteinrichtung mindestens im Bereich der durchzuführenden Beobachtungs-, Bearbeitungs-, Markier-, Lese oder Inspektionsprozesse gewährleistet.

Sind die Abmessungen des Transportzylinders so gewählt, dass die Umfangsteilung die maximale Bogen- oder Bogenausschnittslänge um ein gewisses Maß überschreitet, so ergibt sich aufgrund der verbleibenden Mantelflächen - Stege 85 ein verwindungssteifer und zugleich vorteilhaft zu fertigender Aufbau, der die Funktionseigenschaften der beschriebenen Erfindung aufweist.

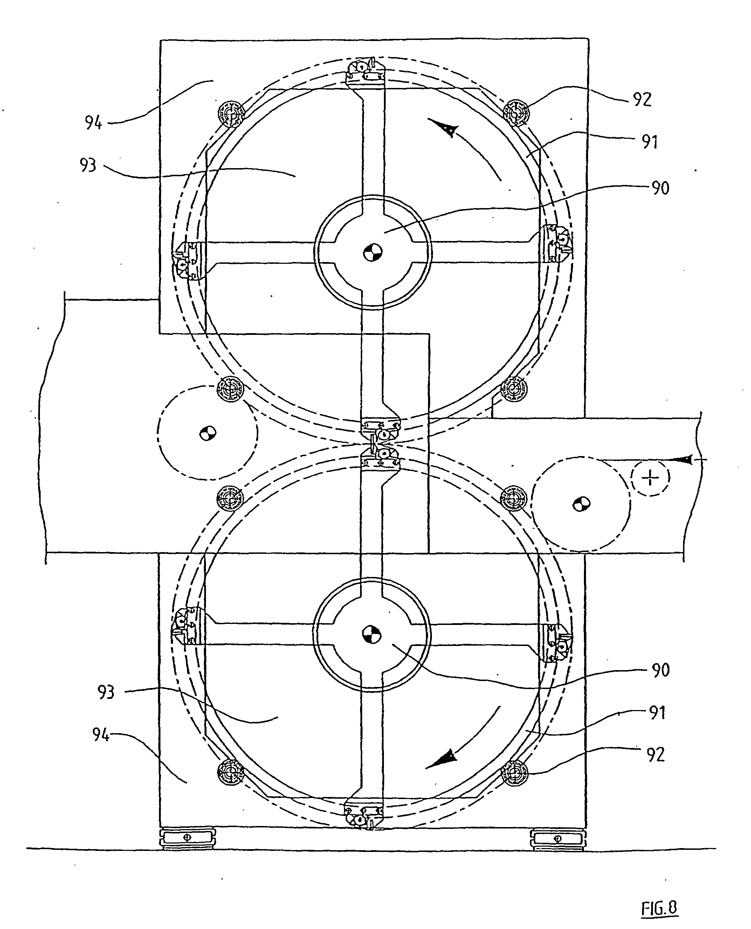

In der Beschreibung gemäß Fig. 8 wird eine besonders montage-, wartungs- und bediengünstige Ausführungsvariante gezeigt, die von einer Bedienseite (hier: Ansichtsseite) zum Innenraum der Transporteinrichtung hin frei zugänglich ist.

Alle Lager-, Steuer- und Antriebselemente sind in der bereits beschriebenen Weise auf einer Antriebsseite 90 zusammengefasst.

Von der hier gezeigten Bedienseite her erfolgt die Lagerung der rotierenden Transporteinrichtung über einen annähernd auf Nenndurchmesser der Bogenbahn angeordneten Laufring 91, der über in den Seitengestellen der Bedienseite angebrachte Stützrollen oder Lagerelemente 92 geführt wird.

Die Fläche 93 wird innerhalb des Laufringes 91 ist somit frei von Lager- oder sonstigen Bauelementen und kann der freien Zugänglichkeit der im Innenraum der Einrichtung installierten Systemen dienen. Die Seitengestelle 94 der Bedienseite sind in diesem Bereich entsprechend ausgespart. Da diese Zugänglichkeit auch im Betriebszustand der Anlage besteht, können von der Bedienseite her auch Haltevorrichtung oder Versorgungseinrichtungen zu den Arbeitssystemen geführt werden oder Vorrichtungen angebracht werden, die ein seitliches Herausfahren der Systeme von der Betriebsposition in eine Wartungsposition gestatten.

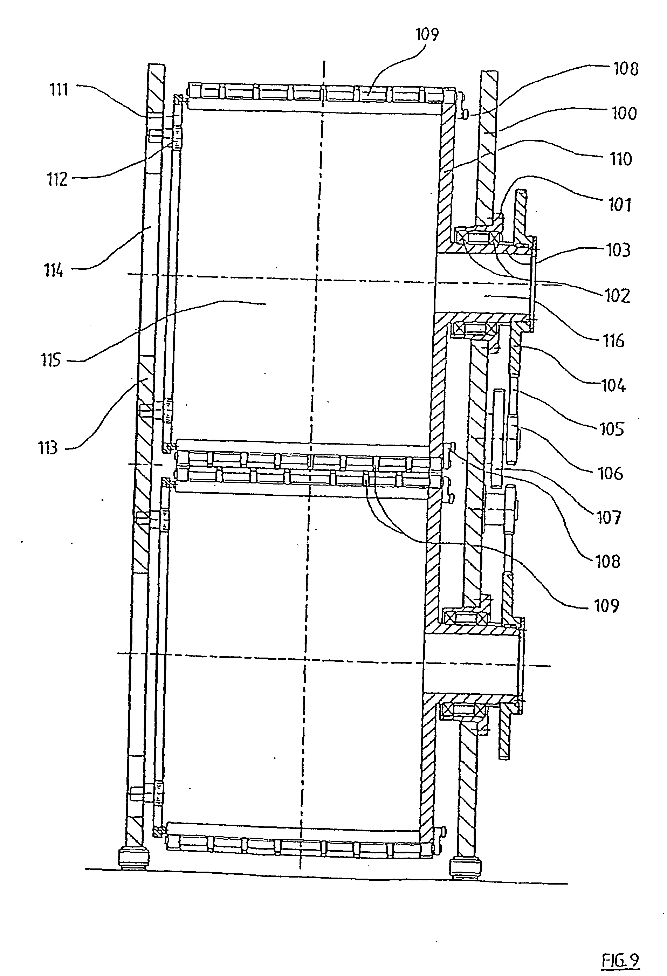

In der Darstellung gemäß Fig. 9 ist ein beispielhafter Querschnitt durch die in Fig. 8 beschriebene Bauweise mit einseitig offener Bedienseite gezeigt.

Die zu installierenden Systeme im Innenraum sind in dieser Ansicht nicht dargestellt.

Das Seitengestell 100 der Antriebsseite dient der Aufnahme eines Lagerelementes 101 für die Hauptlagerung 102 der Bogentransporteinrichtung. Auf dem Antriebsflansch 103 ist das hier als Zahnscheibe dargestellte Antriebsrad 104 gelagert.

Mittels der Übertragungselemente, hier beispielhaft Zahnriemen 105, Zahnriemenscheiben 106 und Zahnrädern 107 erfolgt, wie bereits beschrieben, der Antrieb der Transporteinrichtung.
Ebenfalls sind alle Steuerelemente, wie z.B. Kurvenscheiben (hier nicht dargestellt) für die Steuerung der Bogengreifersysteme 109 der Transporteinrichtung über Kurvenrollen 108 antriebsseitig angeordnet. Weiterhin befindet sich der mechanisch geschlossene oder tragende Teil 110 der Transporteinrichtung selbst auf der Antriebsseite.

Bedienseitig erfolgt eine Stützlagerung über einen auf annähernd Nenndurchmesser der Bogenbahn angeordneten Laufring 111, der als Außen- oder Innenlaufring ausgebildet sein kann, sowie über im Seitengestell angebrachte Kurvenrollen 112.
Das Seitengestell 113 der Bedienseite ist innerhalb der vom Laufring 111 beschriebenen Fläche weitestgehend geöffnet um durch die Bedienöffnung 114 den freien Zugriff auf die im Innenraum 115 installierten Systeme zu gewährleisten.

Um eine beidseitig tragende mechanische Befestigung der Arbeitsysteme zu ermöglichen ist weiterhin auch der gegenüberliegende Antriebsflansch 103 als Hohlwelle ausgebildet.
Durch die Flanschöffnung 116 können in vorteilhafter Weise z.B. Haltetraversen oder Installationselemente zum Zwecke einer starren antriebsseitigen Verankerung zum Seitengestell hin nach außen geführt werden.

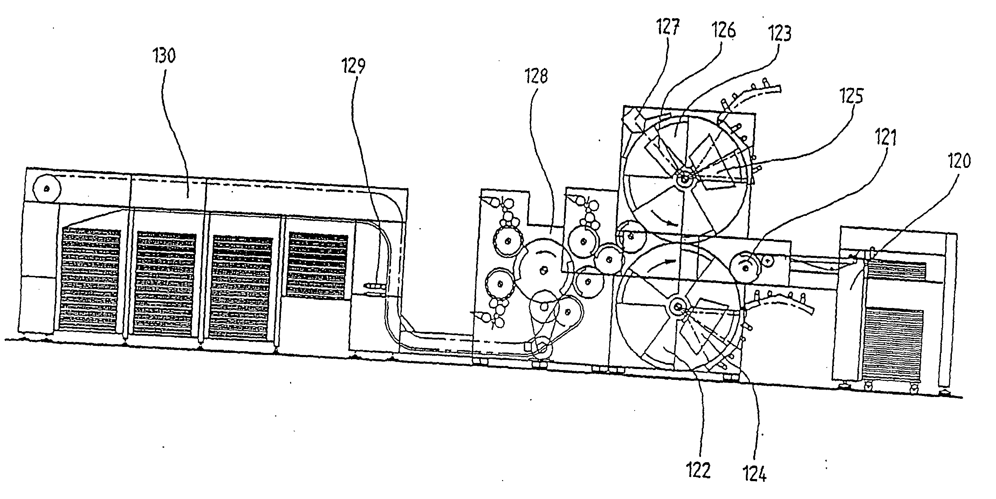

In der Darstellung gemäß Fig. 10 ist die Bogentransporteinrichtung als funktionaler Bestandteil in eine bestehende Bogenmaschine integriert.

Von einem Bogenanleger 120 wird über eine Anlagetrommel 121 der Bogen umfangs- und seitenregisterhaltig der Bogentransporteinrichtung zugeführt.

Die hier beispielhaft dargestellte Transporteinrichtung ermöglicht in ihrem Vorderseitenaggregat 122 die Beaufschlagung der Bogenvorderseite, sowie in ihrem Rückseitenaggregat 123 die Beaufschlagung der Bogenrückseite in erfindungsgemäßer Weise.

Die mittels der in der Bogentransporteinrichtung installierten Systeme 124, 125, 126, 127 erhaltenen oder aufgebrachten Bogendaten oder Markierungen können in der hier dargestellten Anordnung in vorteilhafter Weise dazu verwendet werden, weitere Produktions- oder Sortiervorgänge in den nachgeordneten Druck- oder Bogenablageaggregaten zu steuern, zu unterbrechen oder zu verändern. Aufgrund des erfindungsgemäßen registerhaltigen Bogentransportes in der Bogentransporteinrichtung kann der Druckbogen über Übergabezylinder direkt, d. h. ohne weitere mechanische Bogenausrichtung, z. B. an eine anschließende Bogendruckmaschine 128 übergeben werden.

Weiterhin können in einer Markiervorrichtung 129 die von den in der Bogentransporteinrichtung installierten Systemen erzeugten und übertragenen Bogendaten als lesbare oder codierte Information z. B. mittels eines Tintenstrahldruckers oder eines Farbsprühsystems auf den Druckbogen aufgebracht werden.

In geeigneter Ausführung kann die Markiervorrichtung 129 auch dazu dienen, einzelne Druckbogen oder Einzelnutzen durch Aufbringen eines erkennbaren oder maschinenlesbaren Symbols wie z.B. Farbbalken zu entwerten oder besonders zu kennzeichnen.

Eine Sortierung der produzierten Druckbogen kann in einer Bogenablage 130 mit mehreren Bogenstapeln je nach der durch die in der Transporteinrichtung 122, 123 installierten Systeme 124, 125, 126, 127 erhaltenen Produktionsklassifizierung oder der in der Markierstation 129 vorgenommenen Kennzeichnung erfolgen.

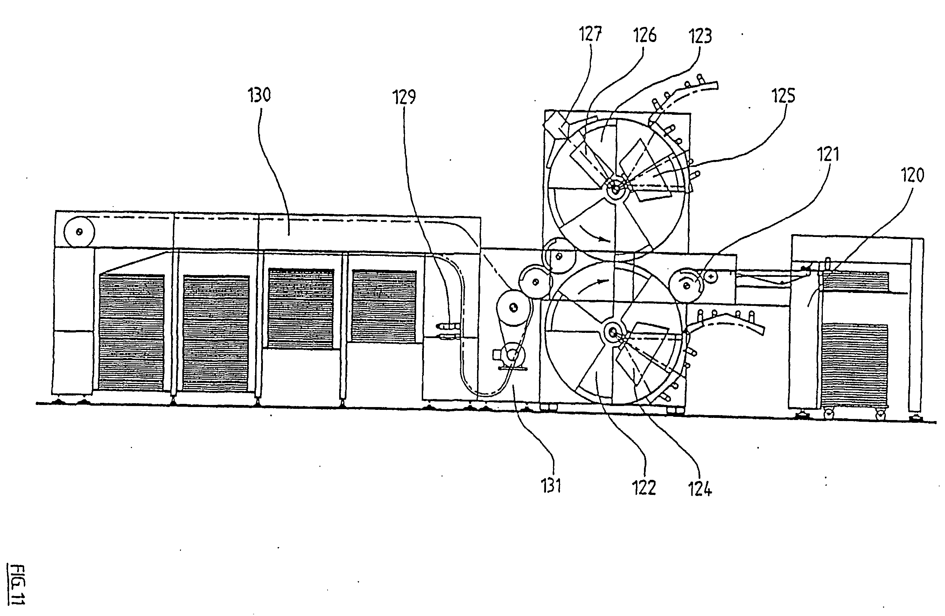

In der Darstellung gemäß Fig. 11 ist die Bogentransporteinrichtung als Hauptaggregat einer eigenständig betriebenen Bogenmaschine gezeigt.

Die Bogenanlagekomponenten 120, 121 sowie die Transporteinrichtung 122, 123 und deren Arbeitssysteme 124, 125, 126, 127 entsprechen hierbei der in Fig. 10 dargestellten Anordnung.

Anschließend erfolgt jedoch kein weiterer Produktionsoder Druckvorgang in einem Druckaggregat sondern die direkte Übergabe des transportierten Bogens an die Bogenablage 130 mit den bereits in Fig. 10 beschriebenen Funktionen und z.B. einer integrierten Markierstation 129.

Zum Antrieb der Transporteinrichtung sowie der Bogenanlage und -ablage ist ein eigenständiges Antriebsteil 131 in die Bogenmaschine integriert. Die Hauptfunktion der dargestellten Bauform besteht somit in der von anderweitigen Produktionsprozessen getrennten Durchführung der erfindungsgemäß ablaufenden Bogentransport-, Bearbeitung-, Beobachtungs-, Markierungs- und Inspektionsvorgänge.

## Patentansprüche

1. Einrichtung zum Transport von bogenförmigem Material (1) auf einer mittels eines in sich starren, um eine feststehende Drehachse (20) bewegten Systems erzeugten Transportbahn zur Beaufschlagung der der Drehachse zugewandten Seite des transportierten Materials (1) durch im Inneren des von der Transportbahn umschlossenen Raumes (8) installierte Vorrichtungen,
**dadurch gekennzeichnet, dass** das Transportsystemen durch eine mittels eines in sich starren mechanischen Rahmens verbundene Anzahl von Greifersystemen zu Aufnahme, Transport und Weitergabe von bogenförmigen Material (1) gebildet wird und die Zugänglichkeit der Materialgesamt- oder Teiloberfläche vom Innenraum (8) der Transportbahn her ermöglicht, und.
dass die Führung des durch die Einrichtung transportierten bogenförmigen Materials (1) auf der durch die Einrichtung erzeugten Transportbahn mittels außerhalb des von der Transportbahn umschlossenen Raumes (8) angeordneten Bogenführungselementen (35) erfolgt.

2. Einrichtung nach Anspruch 1, **dadurch gekennzeichnet, dass** es sich bei den im Inneren des von der Transportbahn umschlossenen Raumes (8) installierten Vorrichtungen (9,10,11,12,13) um Materialbearbeitungs-, beobachtungs-, markierungs-, registrierungs-, beleuchtungs-, inspektions- oder sonstige Systeme handeln kann.

3. Einrichtung nach Anspruch 1, **dadurch gekennzeichnet, dass** die in Anspruch 2 beschriebenen Vorrichtungen eine Teilfläche oder die Gesamtfläche des transportierten bogenförmigen Materials (1) vom Inneren des von der Transportbahn umschlossenen Raumes her beaufschlagen.

4. Einrichtung nach Anspruch 1, **dadurch gekennzeichnet, dass** zwei Bogentransporteinrichtungen (32,36) gem. Anspruch 1 derart gekoppelt sind, dass das transportierte Material (1) zunächst einer Bogentransporteinrichtung (32) zur Beaufschlagung einer Bogenseite sowie anschließend einer zweiten Bogentransporteinrichtung (36) zur Beaufschlagung der entgegengesetzten Bogenseite zugeführt wird.

5. Einrichtung nach Anspruch 1 oder gekoppelte Einrichtungen nach Anspruch 4, **dadurch gekennzeichnet, dass** der Antrieb der Bogentransporteinrichtungen (32,36) durch mechanische Mittel (50,51,52) wie Zahnradantrieb, Kettenantrieb oder Zahnriemenantrieb von der Antriebsquelle der Druck- oder Transportmaschine her, in der die Einrichtungen eingebaut sind, erfolgt.

6. Einrichtung nach Anspruch 1 oder gekoppelte Einrichtungen nach Anspruch 4, **dadurch gekennzeichnet, dass** die Antriebe der einzelnen Bogentransporteinrichtungen (32,36) als separate Einzelantriebe, synchronisiert mit der Druck- oder Transportmaschine, in der die Einrichtungen eingebaut sind, ausgeführt sind.

7. Einrichtung nach Anspruch 5, **dadurch gekennzeichnet, dass** die verwendeten Übertragungselemente wie Ketten oder Riemen so angeordnet sind, dass im betriebsbereiten Zustand der Transporteinrichtung mit allen im Innenraum der Einrichtung installierten und beidseitig starr mit dem Maschinenrahmen mechanisch verbundenen Arbeitssystemen ohne Demontage oder Lösen dieser Verbindungen die Übertragungselemente mechanisch frei zugänglich montiert oder demontiert werden können.

8. Einrichtungen nach Anspruch 5 oder 6, **dadurch gekennzeichnet, dass** der Gleichlauf zwischen gekoppelten Bogentransporteinrichtungen (32,36) sowie zwischen den Transporteinrichtungen und voroder nachgeschalteten Übergabezylindern durch auf dem Nenndurchmesser der Transportbahn im Bereich der Greifersysteme angeordnete, radial einstellbare und während der Bogenübergabe gegenseitig im Eingriff befindliche Zahnradsegmente zusätzlich synchronisiert wird.

9. Einrichtung nach Anspruch 8, **dadurch gekennzeichnet, dass** zur Synchronisation des Antriebs der Teilkreisdurchmesser (71) der verwendeten Zahnsegmente (70) kleiner ist als der Nenndurchmesser (72) der Bogentransportbahn und dass sich die beiden Durchmesser im Übergabepunkt des transportierten Bogens (1) von einem Greifersystem zum korrespondierenden Greifersystem so tangieren, dass sich vor Erreichen der Bogenübergabe ein kontinuierlich verringerndes während der Bogenübergabe ein geringstmögliches und nach der Bogenübergabe ein kontinuierlich erweiterndes Zahnspiel ergibt.

10. Einrichtung nach Anspruch 1, **dadurch gekennzeichnet, dass** das Transportsystem alternativ durch einen in Zylinderbauweise ausgeführten und am Umfang mit Bogengreifersystemen (83) versehenen Hohlkörper gebildet wird und die Zugänglichkeit zu der dem Innenraum der Einrichtung zugewandten Gesamt- oder Teilbogenfläche vom Innenraum der Einrichtung her durch geeignete Ausschnitte (84) im Zylindermantel ermöglicht wird.

11. Einrichtung nach Anspruch 1 oder gekoppelte Einrichtung nach Anspruch 4, **dadurch gekennzeichnet, dass** alle Antriebs-, Lager- und Steuerungselemente so auf einer sog. Antriebsseite (90) der Transporteinrichtung zusammengefaßt sind, dass von der gegenüberliegenden Bedienseite der Transporteinrichtung der Innenraum der Einrichtung durch einen seitlich offenen Querschnitt frei zugänglich ist.

12. Einrichtung nach Anspruch 11, **dadurch gekennzeichnet, dass** die Installation, Einstellung, Bedienung, Wartung, Versorgung und Entnahme aller im Innenraum der Transporteinrichtung befindlichen Vorrichtungen vorzugsweise von der offenen Bedienseite her erfolgt.

13. Einrichtung nach Anspruch 11, **dadurch gekennzeichnet, dass** die Lagerung der Transporteinrichtung im Maschinengestell nur einseitig auf der Antriebsseite erfolgt oder auf der Bedienseite aus einem Laufring (91,111) mit einer Bedienöffnung geeigneten Durchmesser besteht, der über im Maschinengestell angeordneten Kurvenrollen oder Lager geführt wird und die Maschinengestelle Bedienöffnungen entsprechender Größe aufweisen.

14. Einrichtung nach Anspruch 1 oder gekoppelte Einrichtung nach Anspruch 4, **dadurch gekennzeichnet, dass** die Bogentransporteinrichtung (32,36) mit den darin installierten Systemen funktionaler Bestandteil einer Bogendruck-, Numerier-, Transport-, Applikations-, Präge-, Verpackungs-, Sortier- oder Bearbeitungsmaschine ist.

15. Einrichtung nach Anspruch 14, **dadurch gekennzeichnet, dass** bei der Integration des Bogentransporteinrichtung in eine Maschine aufgrund der durch die in der Einrichtung installierten Systeme erzeugten Informationen, Klassifikationen, durchgeführten Bearbeitungen, Inspektionen oder aufgebrachten Kennzeichnungen oder Markierung der Ablauf anschließender Arbeitsprozesse in der Maschine dahingehend gesteuert wird, dass diese für einen entsprechenden Bogen (1) ausgeführt, nicht ausgeführt oder verändert werden.

16. Einrichtung nach Anspruch 1 oder gekoppelte Einrichtung nach Anspruch 4, **dadurch gekennzeichnet, dass** die Bogentransporteinrichtung (32,36) als selbständige Maschine mit Materialzuführung und -ablage sowie selbständiger Antriebsquelle zur Bearbeitung, Beobachtung, Markierung, Registrierung, Klassifizierung, Inspektion oder Sortierung von bogenförmigen Material mit Hilfe der im Innenraum der Einrichtung angeordneten Vorrichtungen betrieben wird.

## Claims

1. A device for conveying sheet-like material (1) on a conveying path produced by means of an intrinsically rigid system moving about a stationary axis of rotation (20) in order to act on the side of the conveyed material (1) that faces the axis of rotation by means of devices installed in the interior of the space (8) enclosed by the conveying path **characterized in that** the conveying system is formed by a number of gripper systems connected by means of an intrinsically rigid mechanical frame to hold, convey and forward sheet-like material (1), and which enables accessibility to the entire or partial surface of the material from the interior (8) of the conveying path, and **in that** the guidance of the sheet-like material (1) conveyed by the device on the conveying path produced by the device is carried out by means of sheet guide elements (35) arranged outside the space (8) enclosed by the conveying path.

2. The device according to claim 1, **characterized in that** the devices (9,10,11,12,13) installed in the interior of the space (8) enclosed by the conveying path can be material processing, monitoring, marking, registering, illuminating, inspecting or other systems.

3. The device according to claim 1, **characterized in that** the devices described in claim 2 act on a sub-area or the entire area of the conveyed sheet-like material (1) from the interior of the space enclosed by the conveying path.

4. The device according to claim 1, **characterized in that** two sheet conveying devices (32,26) according to claim 1 are coupled in such a way that the conveyed material (1) is fed first to a sheet conveying device (32) to act on one sheet side and then to a second sheet conveying device (36) to act on the opposite sheet side.

5. The device according to claim 1, or coupled devices according to claim 4, **characterized in that** the drive to the sheet conveying devices (32,36) is provided by mechanical means (50,51,52) such as a gear drive, chain drive or toothed belt drive from the drive source of the printing or conveying machine in which the devices are installed.

6. The device according to claim 1 or coupled devices according to claim 4, **characterized in that** the drives to the individual sheet conveying devices (32,36) are designed as separate individual drives synchronized with the printing or conveying machine in which the devices are installed.

7. The device according to claim 5, **characterized in that** the transmission elements used, such as chains or belts, are arranged in such a way that when the conveying device is ready to operate, with all the working systems installed in the interior of the device and mechanically rigidly connected on both sides to the machine frame, the transmission elements can be assembled or disassembled mechanically and freely accessibly without disassembly or loosening of these connections.

8. The devices according to claim 5 or 6, **characterized in that** the synchronism between coupled sheet conveying devices (32,36) and between the conveying devices and transfer cylinders connected upstream or downstream is additionally synchronized by toothed segments which are arranged at the nominal diameter of the conveying path in the area of the gripper systems, are radially adjustable and interengaged during the sheet transfer.

9. The device according to claim 8, **characterized in that** for synchronisation of the drive the pitch circle diameter (71) of the toothed segments (70) used is smaller than the nominal diameter (72) of the sheet conveying path, and **in that** the two diameters touch at the transfer point of the conveyed sheet (1) from one gripper system to the corresponding gripper system in such a way that, before the sheet transfer is reached, the result is a tooth play which decreases continuously, is the lowest possible during the sheet transfer and widens continuously after the sheet transfer.

10. The device according to claim 1, **characterized in that** the conveying system is alternatively formed by a hollow body of cylindrical design and provided on the circumference with sheet gripper systems (83), and the accessibility from the interior of the device to all or part of the sheet area facing the interior of the device is enabled by suitable cutouts (84) in the cylinder cover.

11. The device according to claim 1 or coupled device according to claim 4, **characterized in that** all the drive, bearing and control elements are combined on a drive side (90), as it is known, of the conveying device in such a way that the interior of the device is freely accessible from the opposite operating side of the conveying device through a cross section which is open at the side.

12. The device according to claim 11, **characterized in that** the installation, adjustment, operation, maintenance, supply and removal of all the devices located in the interior of the conveying device are preferably carried out from the open operating side.

13. The device according to claim 11, **characterized in that** the mounting of the conveying device in the machine frame is carried out on only one side on the drive side, or on the operating side, comprises a running ring (91,111) with an operating opening of suitable diameter, which is guided by cam rollers or bearings arranged in the machine frame, and the machine frames have operating openings of appropriate size.

14. The device according to claim 1, or coupled device according to claim 4, **characterized in that** the sheet transport device (32,36) is a functional component, with the systems installed therein, of a sheet printing, numbering, conveying, application, embossing, packaging, sorting or processing machine.

15. The device according to claim 14, **characterized in that**, when integrating a sheet transporting device in a machine on the basis of the information produced by the systems installed in the device, classifications, processes carried out, inspections, or applied identifications or marking, the progress of subsequent operating processes in the machine is controlled with the effect that these are carried out, not carried out or changed for a corresponding sheet (1).

16. The device according to claim 1 or coupled device according to claim 4, **characterized in that** the sheet conveying device (32,36) is operated as a self-contained machine with material feed and delivery and a self-contained drive source for processing, monitoring, marking, registering, classifying, inspecting or sorting sheet-like material with the aid of the devices arranged in the interior of the device.

## Revendications

1. Dispositif pour le transport de matériau en feuille (1) sur une bande transporteuse produite au moyen d'un système rigide en soi, mobile autour d'un axe de rotation fixe (20), pour solliciter le côté du matériau transporté (1) tourné vers l'axe de rotation par des dispositifs installés à l'intérieur de l'espace (8) entouré par la bande transporteuse,
**caractérisé en ce que** le système de transport est formé par un certain nombre de systèmes de préhension connectés au moyen d'un cadre mécanique rigide en soi, pour la réception, le transport et la restitution de matériau en forme de feuille (1) et permet l'accessibilité de la surface totale ou partielle du matériau depuis l'espace interne (8) de la bande transporteuse, et
**en ce que** le guidage du matériau en forme de feuille (1) transporté par le dispositif s'effectue sur la bande transporteuse produite par le dispositif au moyen d'éléments de guidage de feuilles (35) disposés en dehors de l'espace (8) entouré par la bande transporteuse.

2. Dispositif selon la revendication 1, **caractérisé en ce que** les dispositifs (9, 10, 11, 12, 13) installés à l'intérieur de l'espace (8) entouré par la bande transporteuse peuvent être des systèmes de traitement de matériau, de surveillance, de repérage, d'enregistrement, d'éclairage, d'inspection ou d'autres systèmes.

3. Dispositif selon la revendication 1, **caractérisé en ce que** les dispositifs décrits dans la revendication 2 sollicitent une surface partielle ou la totalité de la surface du matériau en forme de feuille (1) transporté depuis l'intérieur de l'espace entouré par la bande transporteuse.

4. Dispositif selon la revendication 1, **caractérisé en ce que** deux dispositifs de transport de feuilles (32, 36) selon la revendication 1 sont accouplés de telle sorte que le matériau transporté (1) soit d'abord acheminé à un dispositif de transport de feuilles (32) pour solliciter un côté de la feuille et est ensuite acheminé à un deuxième dispositif de transport de feuilles (36) pour solliciter le côté opposé de la feuille.

5. Dispositif selon la revendication 1 ou dispositifs accouplés selon la revendication 4, **caractérisés en ce que** l'entraînement des dispositifs de transport de feuilles (32, 36) s'effectue par des moyens mécaniques (50, 51, 52) comme un entraînement par roue dentée, un entraînement par chaîne ou un entraînement par courroie dentée depuis la source d'entraînement de la machine d'impression ou de transport dans laquelle sont intégrés les dispositifs.

6. Dispositif selon la revendication 1 ou dispositifs accouplés selon la revendication 4, **caractérisés en ce que** les entraînements des dispositifs de transport de feuilles individuels (32, 36) sont réalisés sous forme d'entraînements individuels séparés, synchronisés avec la machine d'impression ou de transport dans laquelle sont intégrés les dispositifs.

7. Dispositif selon la revendication 5, **caractérisé en ce que** les éléments de transfert utilisés comme des chaînes ou des courroies sont disposés de telle sorte que dans l'état prêt à l'utilisation du dispositif de transport avec tous les systèmes de travail installés dans l'espace interne du dispositif et connectés mécaniquement rigidement des deux côtés au cadre de la machine, les éléments de transfert peuvent être montés ou démontés mécaniquement de manière librement accessible sans démontage ou desserrage de ces connexions.

8. Dispositifs selon la revendication 5 ou 6, **caractérisés en ce que** le synchronisme entre les dispositifs de transport de feuilles accouplés (32, 36) ainsi qu'entre les dispositifs de transport et les cylindres de transferts montés avant ou après, est synchronisé en outre par des segments de roue dentée disposés sur le diamètre nominal de la bande transporteuse dans la région des systèmes de préhension, ajustables radialement et se trouvant en engagement mutuel pendant le transfert des feuilles.

9. Dispositif selon la revendication 8, **caractérisé en ce que** pour la synchronisation de l'entraînement, le diamètre du cercle partiel (71) des segments dentés utilisés (70) est plus petit que le diamètre nominal (72) de la bande transporteuse des feuilles et **en ce que** les deux diamètres se touchent tangentiellement au niveau du point de transfert de la feuille transportée (1) depuis un système de préhension au système de préhension correspondant, de telle sorte qu'on obtienne un jeu entre les dents se réduisant constamment avant d'atteindre le transfert de la feuille, aussi petit que possible pendant le transfert de la feuille et s'élargissant constamment après le transfert de la feuille.

10. Dispositif selon la revendication 1, **caractérisé en ce que** le système de transport est formé en variante par un corps creux réalisé suivant une construction cylindrique et pourvu sur sa périphérie de systèmes de préhension de feuilles (83) et l'accessibilité à la surface totale ou partielle de la feuille tournée vers l'espace interne du dispositif depuis l'espace interne du dispositif est permise par des sections appropriées (84) dans l'enveloppe cylindrique.

11. Dispositif selon la revendication 1 ou dispositif accouplé selon la revendication 4, **caractérisés en ce que** tous les éléments d'entraînement, de palier et de commande sont rassemblés sur un côté dit d'entraînement (90) du dispositif de transport de telle sorte que l'espace interne du dispositif soit librement accessible depuis le côté d'utilisation opposé du dispositif de transport par une section transversale ouverte latéralement.

12. Dispositif selon la revendication 11, **caractérisé en ce que** l'installation, l'ajustement, l'utilisation, l'entretien, l'alimentation et le retrait de tous les dispositifs se trouvant dans l'espace interne du dispositif de transport s'effectuent de préférence depuis le côté d'utilisation ouvert.

13. Dispositif selon la revendication 11, **caractérisé en ce que** le support sur palier du dispositif de transport dans le bâti de la machine ne s'effectue que d'un côté du côté de l'entraînement ou se compose, du côté de l'utilisation, d'une bague de roulement (91, 111) avec une ouverture d'utilisation de diamètre approprié, qui est guidée par le biais de suiveurs de came ou de paliers disposés dans le bâti de la machine, et le bâti de la machine présente des ouvertures d'utilisation de taille correspondante.

14. Dispositif selon la revendication 1 ou dispositif accouplé selon la revendication 4, **caractérisés en ce que** le dispositif de transport de feuilles (32, 36) avec les systèmes installés dans celui-ci fait partie d'une machine d'impression de feuilles, de numérotation, de transport, d'application, d'estampage, d'emballage, de classement ou de traitement.

15. Dispositif selon la revendication 14, **caractérisé en ce que** lors de l'intégration du dispositif de transport de feuilles dans une machine, sur la base des informations, classifications, traitements effectués, inspections ou identifications appliquées ou repérages produits par les systèmes installés dans le dispositif, le déroulement d'opérations de travail subséquentes dans la machine est commandé de telle sorte que celles-ci soient effectuées, non effectuées ou modifiées pour une feuille (1) correspondante.

16. Dispositif selon la revendication 1 ou dispositif accouplé selon la revendication 4, **caractérisé en ce que** le dispositif de transport de feuilles (32, 36) est utilisé en tant que machine autonome avec alimentation et dépose de matériaux et avec une source d'entraînement autonome pour le traitement, la surveillance, le repérage, l'enregistrement, la classification, l'inspection ou le classement de matériau en forme de feuille, à l'aide des dispositifs disposés dans l'espace interne du dispositif.
